# EUROPEAN PATENT APPLICATION

(11) **EP 1 592 141 A2**
(43) Date of publication of application: **02.11.2005**
(21) Application number: 05009232.9
(22) Date of filing: 27.04.2005
(51) Int. Cl.: H04B 1/38, H04M 1/60

(54) **Apparatus and method for controlling speaker volume of push-to-talk (PTT) phone**

(30) Priority: 30.04.2004 KR 2004030755
(71) Applicant: LG ELECTRONICS INC., Seoul (KR)
(72) Inventor: Lim, Guk-Chan, Suwon, Gyeonggi-Do (KR)
(74) Representative: TER MEER - STEINMEISTER & PARTNER GbR

(57) **Abstract**

An apparatus and method for controlling a speaker volume of a PTT phone are disclosed to avoid an undesirably loud volume sound from a speaker thereof that may be caused due to inadvertence of the user during a PTT call mode. In the PTT call mode, a user's holding of the PTT phone by the hand is sensed according to whether the user is in contact with a contact sensing unit provided at a PTT button or at a receiver, and the speaker volume is automatically adjusted according to a type of the holding (i.e., how the user is holding the PTT phone). Thus, emanation of undesirably loud sound from the loud speaker at an initial stage of call communication (i.e., when the first voice sound emanates from the loud speaker after being transmitted from the other party at a point when the user first listens to the voice of the other party) can be prevented for users' convenience.

## Description

### BACKGROUND OF THE INVENTION

### 1. Field of the Invention

The present invention relates to a push-to-talk (PTT) phone and, more particularly, to an apparatus and method for controlling a speaker volume of a PTT phone.

### 2. Description of the Related Art

Upon subscription for a mobile communication service, a mobile communication terminal (referred to hereinafter as a 'mobile phone') can use a one-to-one communication service with another party as a call is set up therebetween within a communication network established by a mobile communication provider.

In comparison, a mobile radio is a terminal allowing a user to transmit a voice by pressing a PTT button thereof and listen to the voice of the other party by releasing the button. Unlike the mobile phone, the mobile radio does not have regional restrictions in using services and allows point-to-multipoint call communication.

Therefore, a PTT phone having the advantages of both the mobile phone and the mobile radio has been developed to meet users' demands for communication services such that it can be used as a mobile phone as usual while it also can be used as a mobile radio for a leisure activity or in an industrial site.

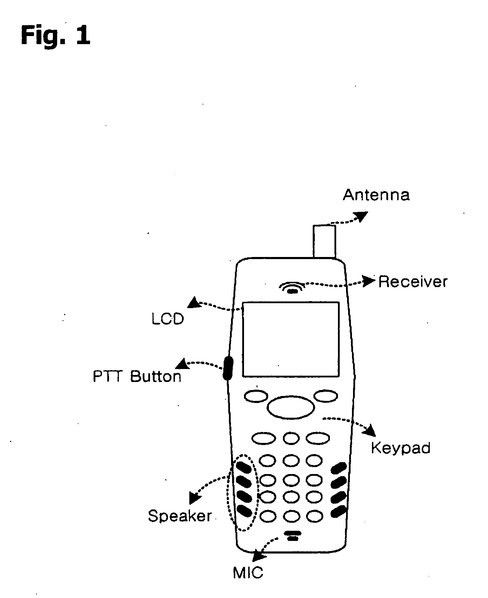

According to the construction of a receiver (namely, a low volume speaker) and a high volume speaker (namely a loud speaker), the PTT phone types can be categorized as a separated type and an integrated type. Figure 1 is a view showing the exterior appearance of a receiver/speaker separated type PTT phone.

The PTT phone has two communication modes: a 'ordinary mobile call mode' to be set when the user wants to use the PTT phone as a mobile phone, and a 'PTT call mode' to be set when the user wants to use the PTT phone as a mobile radio.

In order to use the PTT phone as a mobile phone, the user can naturally grasp a lower portion of the PTT phone without letting a finger contact with a PTT button and communicate with the other party with the receiver portion of the PTT phone being held close to the user's ear.

Meanwhile, in order to use the PTT phone as a mobile radio, the user can press a finger on the PTT button of the PTT phone and communicate with the other party by using the speaker, with a certain interval maintained between the user's head and the PTT phone in a facing relationship. It is noted that the way the user holds the PTT phone differs depending on the communication mode the user can select.

However, a problem arises. That is, the user may inadvertently mistake the PTT call mode as the ordinary mobile call mode and put the PTT phone close to the ear to proceed with communication with the other party only to be surprised by the high volume of the voice of the other party popped up from the loud speaker. Thus, in order to solve this problem, a related art PTT phone is designed such that the receiver used for the general mobile call mode and the speaker used for the PTT call mode are not arranged at the same position (i.e., they are located at different respective positions). Namely, the speaker is arranged at the side of a key pad or at a rear surface of the terminal in order to protect user's hearing against such a problem that the user mistakes the call mode.

Even with such a structural disposition of the speaker, however, the receiver and the speaker are positioned too close together to completely avoid the problem: the user still can mistake the call mode in the PTT call mode and inadvertently put the PTT phone close to the ear.

### SUMMARY OF THE INVENTION

Therefore, it is an object of the present invention to provide an apparatus and method for controlling a speaker volume of a PTT phone capable of protecting against a user's frequent inadvertence or carelessness in a 'PTT call mode'.

To achieve at least the above object in whole or in part, there is provided an apparatus for controlling a speaker volume of a PTT phone including a contact sensing unit for sensing contact with a user, a contact sense signal output unit for outputting a contact sense signal or a non-contact sense signal according to whether or not the contact sensing unit senses contact, and a volume controller for controlling a speaker volume according to the contact sense signal or the non-contact sense signal.

Preferably, the contact sensing unit is formed at a PTT button of the PTT phone, and/or the contact sensing unit is formed at a receiver of the PTT phone which contacts with the ear of the user or at a specific portion of the PTT phone which contacts with the face of the user.

To achieve at least these advantages in whole or in part, there is further provided a method for controlling a speaker volume of a push-to-talk (PTT) phone allowing call communication in an ordinary mobile call mode or in a PTT call mode, including sensing a user's contact with a PTT button, and controlling a speaker volume of the PTT phone when the user's contact with the PTT button is sensed.

Preferably, the contact is sensed by an electrical signal of a small current generated when the hand of the user is in contact with the PTT phone, and/or the contact is sensed by an optical sensor.

Preferably, the speaker is a receiver-speaker integrated type or a receiver-speaker separated type.

Preferably, the speaker volume is controlled to be one-step lower than a currently set volume level when the user's contact with the PTT button is not sensed.

Preferably, the currently set speaker volume is controlled to be maintained when the user's contact with the PTT button is sensed.

Additional advantages, objects, and features of the invention will be set forth in the description which follows and will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements and wherein:
Figure 1 is a view showing an exterior appearance of a PTT phone in accordance with the conventional art;
Figure 2 is a schematic circuit diagram showing an apparatus for controlling a speaker volume of a PTT phone in accordance with the present invention;
Figure 3 is a flow chart of a method for controlling the speaker volume of the PTT phone in accordance with the present invention; and
Figure 4 is a flow chart of a method for controlling a speaker volume of a PTT phone having a contact sensing unit formed at a portion where the user's face is to be in contact with the PTT phone in a mobile phone mode.

### DETAILED DESCRIPTION OF THE PREFERRED EMBODIMENTS

The present invention is implemented in a push-to-talk (PTT) phone having a touch switch function provided at a PTT button or at another specific portion.

The present invention is applied to a case where a user performs call communication with another party in a PTT call mode. In the present invention, when a finger of the user is in contact with the PTT button of the PTT phone having the touch switch function, it is recognized that the PTT phone is in the 'PTT call mode' and the speaker volume is adjusted to be normal, while when there is no user's finger contact with the PTT button, the speaker volume is adjusted to be a lower level by one step. Thus, even if the user casually and inadvertently puts the terminal close to the ear in the 'PTT call mode' to proceed with call communication, the speaker volume can be lowered automatically when the user is listening to the other part's voice.

In the present invention, by having the touch switch function added to the push button type PTT button, the PTT phone can determine a call state (i.e., the PTT call mode and the ordinary mobile call mode) of the phone according to a contact state of the user. The state of contact of the user with the PTT button is divided into the following three states for controlling the speaker volume: a first state in which the user's finger is not in contact with the PTT button, a second state in which the user is in contact with the PTT button without pressing it, and a third (talk) state in which the user presses the PTT button and the voice of the user is transmitted to the other party.

Of the three states, the first and second states are not discriminated by the related art PTT phone having the push button type PTT button. In comparison, however, in the present invention having the PTT button with the touch switch function, the two types of states are discriminated by sensing contact of a finger of the user and whether the user is holding the PTT phone (i.e., whether the user is facing the PTT phone or whether the user puts the PTT phone close to the ear) in the 'PTT call mode' is determined according to the discriminated state to control the volume of the speaker. As for the third state, because there is no speaker output in the transmission (talk) state, description therefor is omitted.

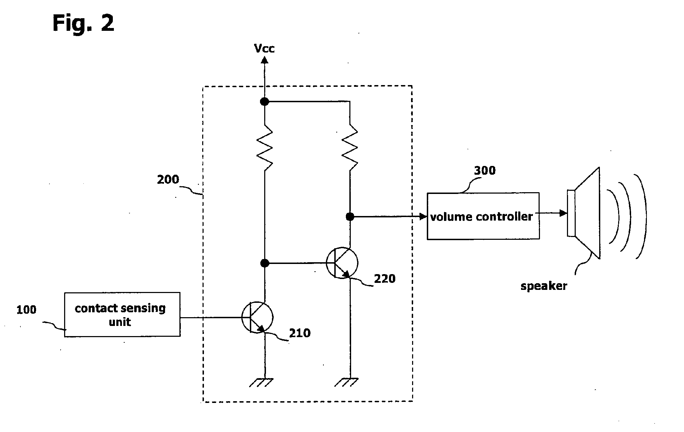

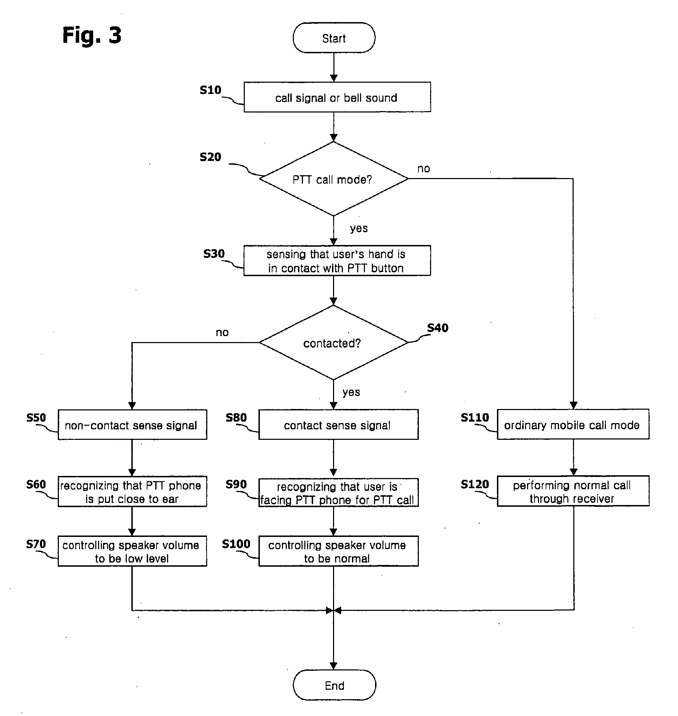

Figure 2 is a schematic block circuit diagram showing an apparatus for controlling the speaker volume of a PTT phone in accordance with the present invention, and Figure 3 is a flow chart of a method for controlling the speaker volume of the PTT phone in accordance with the present invention.

The PTT phone to which the present invention is applied includes a program and hardware for executing the method of the present invention. The hardware of the PTT phone includes a microprocessor (MPU) operating the program and controlling other units, a PTT button for use during a PTT call, a separated type receiver-loud speaker or integrated type speaker, a key pad having a transmission key for use when making an ordinary mobile call, an LCD as an output unit, and a storage unit for storing the program and other information.

With reference to Figures 2 and 3, when the PTT phone receives a call from the other party or a bell ringing of the PTT phone is sounded, the user answers with the PTT phone (steps S10 and S20). In this case, finger contact of the user with a contact sensing unit 100 formed at the PTT button of the PTT phone is sensed according to how the user holds the PTT phone (step S30).

When a finger of the user is in contact with the contact sensing unit 100 of the PTT button (step S40), a first transistor 210 of a contact sense signal output unit 200 is turned on by an electrical signal of a small current generated when the contact occurs and applied to its base terminal from the contact sensing unit 100 while a second transistor 220 is turned off, so that the contact sense signal output unit 200 outputs a high level signal, namely, a contact sense signal (step S80). Upon receiving the high level signal, a volume controller 300 determines that the user is performing normal PTT call communication, by holding the PTT phone with a finger being in contact with the PTT button (i.e., a state that the user is facing the PTT phone) (step S90), and accordingly, controls the speaker volume to be normal with a currently set volume level (step S100).

However, in the 'PTT call mode' (step S20), if the user mistakes the PTT call mode for an ordinary mobile call mode with respect to a call signal from the other party (step S10), so that the user would put the phone close to the ear to perform call communication, in this case, if a finger of the user is not in contact with the contact sensing unit 100 (steps S30 and S40), then, no signal is applied from the contact sensing unit 100 to the base of the first transistor 210, so that the first transistor 210 of the contact sense signal output unit 200 is turned off and the second transistor 220 is turned on, so that the contact sense signal output unit 200 outputs no signal or only a low level signal, namely, a non-contact sense signal.

Upon receiving the low level signal, the volume controller 300 determines that the user has mistaken the PTT call for an ordinary mobile call because the user performs call communication, naturally holding the lower portion of the PTT phone with the hand without having a finger contact with the PTT button (step S60), and accordingly controls the speaker volume to be lowered one step from the currently set speaker volume (step S70).

Meanwhile, in the ordinary mobile call mode (step S110), when the user performs call communication in response to a call signal from the other party, a voice signal of the other party is sounded through the receiver, so the volume of the speaker does not need to be adjusted (step S120). However, in case of the PTT phone having an integrated type receiver-speaker, the speaker volume is adjusted through the above-described process.

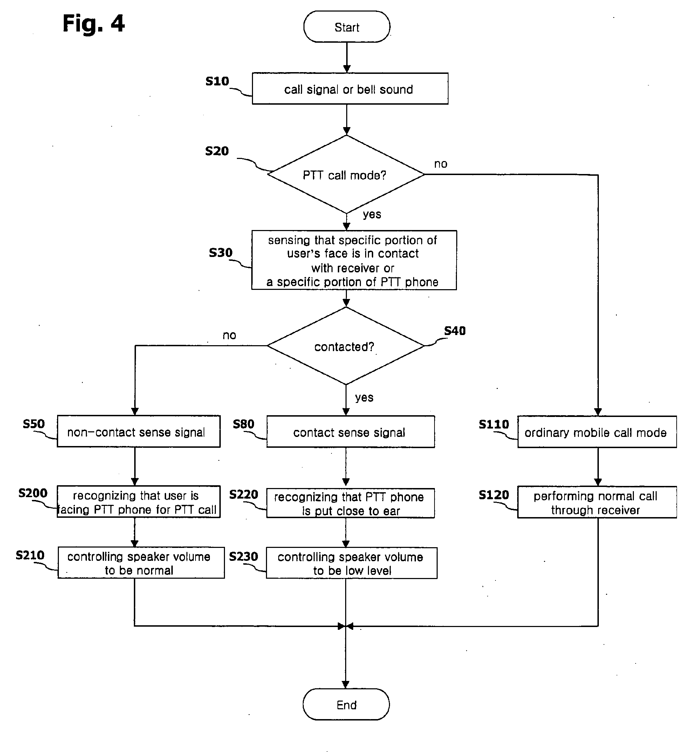

Figure 4 is a flow chart of a method for controlling a speaker volume of a PTT phone having a contact sensing unit formed at a portion where the user's face is to be in contact.

The embodiment of the method illustrated in Figure 4 is similar to that of the method illustrated in Figure 3. Thus, the same reference numerals as those in Figure 3 are given and the same process as that in the method of Figure 3 is performed. In the method of Figure 4, the operation of the first and second transistors of the speaker volume unit of the PTT phone and a speaker volume control method are different from the former embodiment of Figure 3.

In detail, when the contact sensing unit 100 formed at a specific portion, such as the receiver portion, of the PTT phone senses a user's contact (steps S30 and S40), the first transistor 210 of the contact sense signal output unit 200 is turned on by the electrical signal of a small current generated when the contact occurs, while the second transistor 220 is turned off, to output a high level signal, namely, the contact sense signal (step S80).

Upon receiving the high level signal, the volume controller 300 determines that the user has mistaken the PTT call (for which the user faces the PTT phone) as an ordinary mobile call (for which the user puts the PTT phone close to the ear) and performs communication (step S220), and controls the speaker volume to be one step lower than the currently set speaker volume (step S230). Contrary to the case where the speaker volume is adjusted to be a lower level when the user's contact with the contact sensing unit 100 of the PTT button is not sensed in the former embodiment of Figure 3, in this embodiment of Figure 4, the speaker volume is adjusted to be a lower level when user's contact with the contact sensing unit 100 is sensed.

In the present invention, the contact sensing unit 100 and the contact sense signal output unit 200 of the PTT phone can be implemented through an optical sensor using a reflection principle of light in order to sense a user's contact. In addition, the contact sensing unit 100 and the contact sense signal output unit 200 also can be implemented by using switches.

As so far described, the apparatus and method for controlling a speaker volume of the PTT phone in accordance with the present invention have the following advantages.

For example, a user's holding of the PTT phone by the hand is sensed according to whether the user is in contact with the contact sensing unit provided at the PTT button or at the receiver, and the speaker volume is automatically adjusted according to a type of the holding (i.e., how the user is holding the PTT phone). Thus, an undesirably loud volume level caused due to a loud speaker at an initial stage of call communication (i.e., the first voice sounded from the loud speaker after being transmitted from the other party at the point when the user first listens to the voice of the other party) can be prevented for users' convenience.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A method for controlling a speaker volume of a push-to-talk (PTT) phone allowing call communication in an ordinary mobile call mode or in a PTT call mode, comprising:
sensing whether a user's contact with a PTT button of the PTT phone is or not; and
controlling a speaker volume of the PTT phone according to whether or not the user's contact with the PTT button is sensed.

2. The method of claim 1, wherein the afore-mentioned steps are performed when the PTT phone is in the PTT call mode.

3. The method of claim 1, wherein the PTT button has a touch switch function.

4. The method of claim 1, wherein the contact is sensed by an electrical signal of a small current generated when the hand of the user is in contact with the PTT button.

5. The method of claim 1, wherein the contact is sensed as a light generated from an optical sensor is reflected by the hand of the user when the user's hand is in contact with the PTT button.

6. The method of claim 1, wherein the speaker is a receiver-speaker integrated type or separated type speaker.

7. The method of claim 1, further comprising:
outputting a contact sense signal when the user's contact with the PTT button is sensed.

8. The method of claim 7, wherein the speaker volume is controlled in response to the contact sense signal.

9. The method of claim 1, wherein when the user's contact with the PTT button is not sensed, the speaker volume is controlled to be lower than a currently set volume level.

10. The method of claim 1, wherein when the user's contact with the PTT button is sensed, the currently set speaker volume is controlled to be maintained.

11. A method for controlling a speaker volume of a PTT phone allowing communication in an ordinary mobile call mode and in a PTT call mode, wherein when a user's contact with a specific portion of the PTT phone is sensed in the PTT call mode, a contact sense signal is outputted to control the speaker volume of the PTT phone.

12. The method of claim 11, wherein the contact is sensed by an electrical signal of a small current generated when a specific portion of the user's face is in contact with a specific portion of the PTT phone.

13. The method of claim 11, wherein the contact is sensed by an optical sensor when the specific portion of the user's face is in contact with the specific portion of the PTT phone.

14. The method of claim 11, wherein the speaker is a receiver-speaker integrated type or separated type speaker.

15. The method of claim 11, wherein when the contact sense signal is not outputted, the currently set speaker volume is controlled to be maintained.

16. The method of claim 11, wherein when the contact sense signal is outputted, the speaker volume is adjusted to be lower than the currently set volume level.

17. The method of claim 11, wherein the specific portion of the PTT phone is a receiver of the PTT phone which contacts with the ear of the user or a certain portion of the PTT phone which contacts with the face of the user.

18. An apparatus for controlling a speaker volume of a push-to-talk (PTT) phone allowing call communication in an ordinary mobile call mode and in a PTT call mode, comprising:
a contact sensing unit for sensing contact with a user;
a contact sense signal output unit for outputting a contact sense signal or a non-contact sense signal according to whether or not the contact sensing unit senses the user's contact; and
a volume controller for controlling a speaker volume according to the sense signal or the non-contact sense signal.

19. The apparatus of claim 18, wherein the contact sensing unit is provided at a PTT button of the PTT phone.

20. The apparatus of claim 18, wherein the contact sensing unit is provided at a receiver of the PTT phone which contacts with the ear of the user or at a specific portion of the PTT phone which contacts with the face of the user.

21. The apparatus of claim 18, wherein the contact sensing unit senses an electrical signal of a small current generated when the user is in contact therewith.

22. The apparatus of claim 18, wherein the contact sensing unit senses the user's contact by using an optical sensor.

23. The apparatus of claim 18, wherein the speaker is a receiver-speaker integrated type or separated type speaker.

24. The apparatus of claim 18 or 19, wherein when a user's contact with the PTT button is not sensed, the volume controller outputs a non-contact sense signal to control the speaker volume to be lower than the currently set volume.

25. The apparatus of claim 18 or 20, wherein when the ear of the user is in contact with a receiver of the PTT phone or when the face of the user is in contact with a specific portion of the PTT phone, the volume controller outputs the contact sense signal to control the speaker volume to be lower than a currently set volume level.
